# EUROPÄISCHE PATENTANMELDUNG

(11) **EP 3 266 580 A1**
(43) Veröffentlichungstag der Anmeldung: **10.01.2018**
(21) Anmeldenummer: 17001009.4
(22) Anmeldetag: 14.06.2017
(51) Int. Cl.: B29C 37/00, B29C 44/12, B29K 105/00, B29K 105/06

(54) **VERFAHREN ZUR HERSTELLUNG EINES FLÄCHENHAFT AUSGEBILDETEN BAUELEMENTES UND BAUELEMENT**

(30) Priorität: 05.07.2016 DE 102016112290
(71) Anmelder: PARAT Beteiligungs GmbH, 94089 Neureichenau (DE)
(72) Erfinder: Kornexl, Christian, 94133 Röhrnbach (DE)
(74) Vertreter: Roche, von Westernhagen & Ehresmann

(57) **Zusammenfassung**

Dargestellt und beschrieben sind zwei Verfahren zur Herstellung eines flächenhaft ausgebildeten Bauelementes in Sandwich-Leichtbauweise mit einer hochwertigen Oberfläche umfassend die folgenden Schritte: a) Bereitstellen eines Schaumkernes (16), b) Einbringen einer Barriereschicht-Vergussmasse (17) in ein Unterwerkzeug (39) eines Werkzeuges (38), c) Aushärtenlassen der Barriereschicht-Vergussmasse (17) in dem Unterwerkzeug (39) zu einer dünnwandigen Barriereschicht (18), g) Schließen des Werkzeugs (38), h) Aushärtenlassen der Matrix (21), i) Öffnen des Werkzeugs und Entnehmen des so gebildeten Bauelementes (10, 10').

Beim ersten Verfahren erfolgen zwischen den Schritten c) und g) die Schritte d) Umhüllen des Schaumkerns (16) mit einer Matte (19) aus Verstärkungsfasern, e) Allseitiges Tränken der Matte (19) mit einer Matrix aus einer Polyurethan-Vergussmasse (20), f) Einbringen des mit der getränkten Matte (19) umhüllten Schaumkerns (16) in das mit der ausgehärteten Barriereschicht (18) innenseitig ausgekleidete Unterwerkzeug (39).

Beim zweiten Verfahren erfolgen zwischen den Schritten c) und g) die Schritte dd) vollständiges Umhüllen des Schaumkerns (16) mit einer Umhüllungsmatrix aus Polyurethan-Vergussmasse und Verstärkungsfasern, ee) wobei der Schaumkem (16) erst in das Unterwerkzeug (39) eingebracht wird, wenn die Barriereschicht (18) ausgehärtet ist, ff) und wobei das Umhüllen des Schaumkerns teilweise oder vollständig außerhalb des Werkzeugs (38) oder teilweise oder vollständig innerhalb des Werkzeuges (38) erfolgt.

## Beschreibung

Die Erfindung betrifft zunächst ein Verfahren zur Herstellung eines flächenhaft ausgebildeten Bauelementes in Sandwich-Leichtbauweise mit einer hochwertigen Oberfläche.

Leichtbau-Sandwich-Bauelemente werden von der Anmelderin seit geraumer Zeit entwickelt und gefertigt. Beispielsweise wird verwiesen auf die deutsche Patentanmeldung DE 10 2013 006 300.0 der Anmelderin, die ein in Leichtbauweise hergestelltes Bauelement offenbart. Allerdings geht es hier nicht um die erfindungsgemäß im Fokus stehende Herstellung eines flächenhaft ausgebildeten Bauelementes in Sandwich-Leichtbauweise mit einer hochwertigen Oberfläche, sondern um ein Verfahren zur Herstellung eines Strukturbauteils, das als Stützelement oder als Trägerbauteil eingesetzt werden kann.

Aus der deutschen Patentanmeldung DE 10 2013 008 364.8 ist ein weiteres, von der Anmelderin entwickeltes Verfahren bekannt, mit dem ein Strukturbauteil für Außenanwendungen mit einer hochwertigen Oberfläche hergestellt werden kann. Hier ist vorgesehen, dass zunächst ein Bauelement aus einer ausgehärteten Schaummasse bereitgestellt wird, und dieses Bauelement sodann in einer Werkzeugform, beabstandet von dem Werkzeugunterteil, angeordnet wird. Sodann wird zur Bereitstellung der hochwertigen Oberfläche eine flüssige aliphatische Polyurethan-Vergussmasse in einem Zwischenraum zwischen Bauelement und Werkzeugteil angeordnet.

Die mit dem erfindungsgemäßen Verfahren herzustellenden Bauelemente dienen beispielsweise bei Kfz-Anwendungen zur Bereitstellung einer Motorhaube oder eines Innenausstattungsteils. Als flächenhaft ausgebildete Bauelemente werden in Sachen dieser Patentanmeldung insbesondere Bauelemente bezeichnet, die eine Erstreckung in X- und Y-Richtung (also entlang einer Ebene, oder im Wesentlichen entlang einer Ebene) aufweisen, die eine Erstreckung einer vertikal dazu ausgerichteten Richtung (Z-Richtung) deutlich übersteigt.

Bei den bekannten, unter anderem auch von der Anmelderin durchgeführten Verfahren zur Herstellung derartiger Bauelemente, die in Sandwich-Leichtbauweise hergestellt sind, ist die Bereitstellung einer hochwertigen Oberfläche häufig mit Problemen behaftet.

Um Bauelemente in Sandwich-Leichtbauweise bereitzustellen, ist es bekannt, großvolumige Leichtbau-Kerne, z. B. Schaumkerne oder Wabenkerne zu verwenden, die von einer Matrix oder einer härteren Schicht, in die eine Matte aus Verstärkungsfasern eingebettet ist, umhüllt werden.

Diese Matte aus Verstärkungsfasern weist allerdings zwangsläufig eine strukturierte oder texturierte Oberfläche auf, die sich als Struktur abzeichnet. Wenn diese Oberfläche des Bauteils überlackiert wird, oder ggf. auch noch zusätzlich nachbearbeitet worden ist, z. B. durch einen Schleif- oder Poliervorgang, lässt sich häufig nicht vermeiden, dass sich die Oberflächenstruktur in der endfertigen Oberfläche dennoch abzeichnet.

Aus diesem Grunde werden Bauelemente des Standes der Technik nach ihrer Herstellung häufig noch mit einer gesonderten Haut oder Folie kaschiert, und z. B. mit einer Narben-Haut (einer sogenannten genarbten Haut) überzogen.

Erst die Verwendung derartig genarbter Deckfolien - oder anderer Kaschierungen - ermöglicht die Verbauung der bekannten Bauteile an sichtbaren Stellen am Fahrzeug, z. B. im Interieur- oder Exterieurbereich.

Ausgehend von dem vorbeschriebenen, druckschriftlich nicht belegbaren Stand der Technik, liegt der Erfindung die Aufgabe zugrunde, ein Verfahren anzugeben, mit dem auf eine einfache und effiziente Weise Bauelemente hergestellt werden können, die eine hochwertige Oberfläche aufweisen.

Die Erfindung löst diese Aufgabe mit den Merkmalen des Anspruches 1.

Gemäß der Erfindung dient das Verfahren zur Herstellung eines flächenhaft ausgebildeten Bauelementes in Sandwich-Leichtbauweise mit einer hochwertigen Oberfläche.

Als hochwerte Oberfläche wird insbesondere eine sogenannte Class-A-Oberfläche, oder eine Oberfläche, die durch einen einfachen Lackiervorgang - ohne dass noch eine Bearbeitung der Oberfläche wie Schleifen oder dergleichen erforderlich wäre - zu einer Class-A-Oberfläche lackiert werden kann, bezeichnet. Die Class-A-Oberfläche ist ein Terminus-Technicus, der zurzeit im Automobilbau Verwendung findet und eine bestimmte Qualität und Gattung einer Oberfläche, z. B. bezüglich deren Oberflächenrauheit beschreibt.

Die hochwertige Oberfläche des erfindungsgemäß herzustellenden Bauelementes erfordert nicht unbedingt eine Lackierung, ermöglicht aber eine solche Lackierung. Von dem erfindungsgemäßen Verfahren ist also auch die Herstellung von Bauteilen mit solchen Oberflächen umfasst, die besonders gut und einfach lackierbar sind.

Das erfindungsgemäße Verfahren umfasst gemäß dem Schritt a) zunächst die Bereitstellung eines Schaumkerns. Es handelt sich dabei um einen Leichtbau-Kern, dessen dreidimensionale Kontur bereits im Wesentlichen an die dreidimensionale Kontur des anzufertigenden Bauelementes angepasst ist. Der Schaumkern weist allerdings geringere Abmessungen auf als das später noch zu herstellende Bauelement. Dies wird später, im Laufe der Erläuterungen des Herstellungsverfahrens, deutlich.

Der Schaumkern kann als Formteil, insbesondere als Polyurethan-Formteil aus einem Leichtschaum und in einem gesonderten Werkzeug hergestellt worden sein. Es kann sich bei dem Schaumkern alternativ auch um ein Frästeil handeln, d. h. z. B. um ein aus einem Schaum, wie einem Polyurethanschaum oder einem Kunststoffschaum, bestehendes Element, das erst durch ein konturgebendes Verfahren, z. B. durch Fräsen, in Form gebracht wurde. Vorzugsweise handelt es sich um einen Schaum einer vorgegebenen Dichte von etwa zwischen 30g und 500g pro Liter, insbesondere von etwa 100g pro Liter. Es handelt sich dabei um einen relativ leichten Schaumkern.

Gemäß Schritt b) des Anspruches 1 ist vorgesehen, dass eine Barriereschicht-Vergussmasse in ein Unterwerkzeug eingebracht wird. Zur Klarstellung sei angemerkt, dass dieses Unterwerkzeug Bestandteil eines Formwerkzeuges ist, wobei dieses Formwerkzeug überhaupt nichts zu tun hat mit der Herstellung des zuvor beschriebenen Schaumkernes.

Das Unterwerkzeug ist dasjenige Werkzeug, in dem das herzustellende Bauelement gefertigt werden soll. Als Unterwerkzeug wird der untere Teil, beispielsweise die untere Hälfte eines Formwerkzeuges, verstanden, welches beispielsweise eine im Wesentlichen schalenförmige Grundform aufweist, und insbesondere einen im Wesentlichen hohlen, durch eine Bodenwand und durch Seitenwände begrenzten Innenraum bereitstellt. Das Unterwerkzeug ist durch Zusammenwirken mit einem Oberwerkzeug verschließbar. Das Oberwerkzeug kann beispielsweise als Deckel oder Platte ausgebildet sein, oder aber auch eine dreidimensionale Kontur, mit ebenfalls einer Schalenform, aufweisen.

Das Formwerkzeug stellt durch Zusammenwirken von Unterwerkzeug und Oberwerkzeug einen Innenraum bereit, dessen Abmessungen den Abmessungen des zu erstellenden Bauelementes entsprechen.

Gemäß der Merkmalsgruppe b) des Anspruches 1 ist eine Barriereschicht-Vergussmasse vorgesehen, die zunächst in flüssiger Form vorliegt.

Die Barriereschicht-Vergussmasse kann beispielsweise von einer aromatischen Polyurethan-Vergussmasse bereitgestellt sein. Die Barriereschicht-Vergussmasse kann mineralische Verstärkungsstoffe, wie beispielsweise Kreide oder Talkum als Zusatzstoffe enthalten. Hierdurch werden die Schrumpfungseigenschaften positiv beeinflusst. Als Hersteller einer geeigneten Barriereschicht-Vergussmasse ist beispielsweise die Firma Rühl AG & Co. chemische Fabrik KG mit Sitz in 61381 Friedrichsdorf, zu erwähnen.

Die Barriereschicht-Vergussmasse wird in flüssigem Zustand bei geöffnetem Werkzeug von Hand oder unter Verwendung einer Einbringvorrichtung in das Unterwerkzeug eingebracht. Beispielsweise kann hierzu die Einbringvorrichtung entlang der Bodenfläche des Unterwerkzeuges verfahren. Je nach Viskosität der einzubringenden, flüssigen Barriereschicht-Vergussmasse kann sich die Vergussmasse aber gegebenenfalls auch selbstständig entlang der Bodenwand des Unterwerkzeuges durch Fließen verteilen.

Die Bodenwand des Unterwerkzeuges ist bei dem erfindungsgemäßen Verfahren nach Abschluss des Schrittes b) vorteilhafterweise vollständig entlang der Bodenwand verteilt, und überdeckt diese vollständig. Von der Erfindung ist aber auch umfasst, wenn neben der Bodenwand, also einem im Wesentlichen horizontal ausgerichteten Wandabschnitt des Unterwerkzeugs, auch vertikal verlaufende oder im Wesentlichen vertikal verlaufende oder schräg zur Bodenwand verlaufende Wandabschnitte des Unterwerkzeuges - also Seitenwandabschnitte des Unterwerkzeuges - von der Barriereschicht-Vergussmasse mit bedeckt werden. Hierzu kann entweder händisch oder unter Zuhilfenahme einer Einbringvorrichtung ein entsprechender Auftrag der flüssigen Barriereschicht-Vergussmasse auf die Wandungsabschnitte des Unterwerkzeuges erfolgen.

Gemäß Schritt c) des Anspruches 1 wird sodann vorgesehen, dass die Barriereschicht-Vergussmasse aushärtet. Der Aushärtevorgang beansprucht - je nach chemischer Einstellung und Zusammensetzung der Barriereschicht-Vergussmasse - nur eine kurze Zeit, gemäß einer Variante der Erfindung, nur wenige Sekunden.

Gebildet wird hierdurch eine sehr dünnwandige, ausgehärtete Barriereschicht, die eine Wandstärke beispielsweise in der Größenordnung von etwa 1 mm aufweisen kann.

Der von dem Unterwerkzeug bereitgestellte Innenraum wird also nur zu einem sehr geringen Teil von der ausgehärteten Barriereschicht eingenommen. Die ausgehärtete, dünnwandige Barriereschicht folgt mit ihrer Außenseite vollständig der Innenkontur des Unterwerkzeuges, jedenfalls in den Bereichen, in denen zuvor eine Benetzung des Unterwerkzeuges mit der flüssigen Barriereschicht-Vergussmasse erfolgt ist.

Nachfolgend dem Schritt des Aushärtenlassens der Barriereschicht-Vergussmasse oder zeitgleich zu diesem Schritt oder unter Umständen auch zeitlich vor diesem Schritt wird Schritt d) des Anspruches 1 durchgeführt.

Demnach ist vorgesehen, dass der zuvor erwähnte Schaumkern mit einer Matte aus Verstärkungsfasern umhüllt wird. Die Matte umfasst wenigstens eine Lage, z. B. eines Gewebes oder eines Geflechtes oder eines Gewirkes, von Verstärkungsfasern, beispielsweise von Glasfasern. Von der Erfindung ist aber auch umfasst, wenn die Matte mehrere Lagen von Verstärkungsfasergeweben oder -gelegen oder dergleichen Anordnungen umfasst.

Der Schaumkern wird zunächst nur lose von der Matte umhüllt. Hierzu kann beispielsweise vorgesehen sein, dass die beiden Breitseiten des Schaumkernes mit Matten aus Verstärkungsfasern belegt werden. Die Matten können z. B. randseitig oder eckseitig zusammengefügt, z. B. getackert oder genäht werden, so dass sich eine relativ lose, sackartige vollständige oder im Wesentlichen vollständige Umhüllung des Schaumkernes ergibt.

Gemäß Schritt e) des Anspruches 1 wird nun die Matte mit einer Matrix aus einer Polyurethan-Vergussmasse getränkt. Es geht hier im Wesentlichen darum, die Polyurethan-Vergussmasse gleichmäßig entlang der gesamten Matte anzubringen, um die gesamte Matte zu tränken. Das Tränken kann beispielsweise durch Aufbringen der Polyurethan-Vergussmasse von Hand erfolgen, oder alternativ per Roboter geführt, z. B. unter Zuhilfenahme einer Auftragsvorrichtung. Die Polyurethan-Vergussmasse für die Matrix wird insbesondere dünn aufgesprüht.

Gemäß Schritt f) des Anspruches 1 wird nun der Schaumkern, der von der getränkten Matte umhüllt ist, in das mit der ausgehärteten Barriereschicht innenseitig ausgekleidete Unterwerkzeug eingebracht. Der Schaumkern wird also zusammen mit der diesen umhüllenden, getränkten Matte verbracht oder verlagert, entweder von Hand, oder maschinengeführt oder maschinengesteuert. Insbesondere kann diese Verbringungsbewegung auch unter Zuhilfenahme eines Greifarmes erfolgen. Der Schaumkern wird zusammen mit der ihn umhüllenden Matte in das ausgekleidete Unterwerkzeug eingelegt oder auf andere Weise darin eingebracht.

Sodann kann gemäß Schritt g) des Anspruches 1 das Werkzeug geschlossen werden. Die Schließbewegung des Werkzeuges erfolgt z. B. durch ein Aufeinanderzubewegen von Unterwerkzeug und Oberwerkzeug.

Bei geschlossenem Werkzeug lässt man nun die Matrix aushärten. Im Zuge dieses Aushärtevorganges geht die - bereits ausgehärtete - Barriereschicht mit dem Schaumkern und der Matte eine feste Verbindung ein.

Wenn die Matrix ausgehärtet ist, kann das Werkzeug geöffnet und das so gebildete Bauelement entnommen werden.

Die Polyurethan-Vergussmasse der Matrix kann mit einem Katalysator versehen sein, der thermisch aktivierbar ist. Auf diese Weise wird sichergestellt, dass während des Tränkens der Matte eine Aufschäum-Reaktion der Polyurethan-Vergussmasse durch Reaktion des Polyol mit dem Isocyanat noch nicht erfolgt, sondern erst im Unterwerkzeug, und auch erst dann, wenn das Werkzeug geschlossen ist.

Das Unterwerkzeug ist vorzugsweise beheizt. Erst wenn der Schaumkern mit der diesen umhüllenden, getränkten Matte in das geheizte Werkzeug eingelegt wird, wird der Katalysator auf Grund des Erreichens einer Schwelltemperatur aktiviert. Es kommt erst bei in das Werkzeug eingelegtem Zustand zu einer Aufschäum- und Aushärtereaktion der Polyurethan-Vergussmasse der Matrix.

Bei einer alternativen Ausgestaltung der Erfindung kann vorgesehen sein, dass der Polyurethan-Vergussmasse für die Matrix ein Zeitverzögerer als Zuschlagstoff beigefügt ist. Dieser kann dafür sorgen, dass erst nach einer einstellbaren, vorherbestimmten Zeit die Reaktion des in der Polyurethan-Vergussmasse für die Matrix enthaltenen Polyols mit dem Isocyanat erfolgt, also zu einem Zeitpunkt, zu dem gewährleistet werden kann, dass der Schaumkern mit der ihn umhüllenden getränkten Matte dann bereits in das Unterwerkzeug eingebracht ist.

Auf diese Weise kann eine vorzeitige Aufschäumreaktion der Polyurethan-Vergussmasse für die Matrix verhindert werden, und sichergestellt werden, dass diese Aufschäumreaktion erst im Werkzeug erfolgt.

Das gemäß dem beschriebenen Verfahren hergestellte Bauelement weist eine hochwertige Oberfläche auf. Die Oberfläche des aus dem Werkzeug entnommenen Bauelementes wird nämlich - jedenfalls im Bereich wesentlicher Wandungsabschnitte des Unterwerkzeuges - durch die Barriereschicht bereitgestellt. Diese Barriereschicht ist im ausgehärteten Zustand völlig frei von jeglichen Strukturen oder Texturierungen. Die Barriereschicht ist eine hochwertige Oberfläche, insbesondere eine zu einer Class-A-Oberfläche lackierbare Oberfläche, die lediglich das Auftragen eines Lackes erfordert, aber keine darüber hinausgehenden Behandlungen der Oberfläche, wie Schleifen oder Polieren.

Von der Erfindung ist auch umfasst, wenn die Oberfläche nicht mehr lackiert wird.

Die Barriereschicht ist - ohne dass weitere Maßnahmen oder Bearbeitungsschritte erforderlich sind - lackierbar. Sie kann durch Lackierung unmittelbar zu einer Class-A-Oberfläche gestaltet werden.

Das Prinzip der Erfindung besteht also darin, in einem Werkzeug zunächst eine Barriereschicht aushärten zu lassen, und erst nach Beendigung des Aushärtevorganges, sozusagen das Innenleben des Leichtbau-Bauelementes, hinter diese ausgehärtete Barriereschicht zu schäumen. Da die Barriereschicht zuvor ausgehärtet ist, können sich die Strukturen der Matten an der Oberfläche der Barriereschicht nicht abzeichnen. Dabei besteht zur Fertigung der spezifischen Bauteile ein wesentlicher Vorteil darin, dass nur ein Werkzeug benötigt wird.

Die Fertigungsreihenfolge herkömmlicher Bauelemente des Standes der Technik wird sozusagen umgedreht: Erfindungsgemäß erfolgt der Schichtaufbau - jedenfalls im Bereich der herzustellenden, hochwertigen Oberfläche - von außen nach innen.

Gemäß einer besonderen Ausgestaltung des erfindungsgemäßen Verfahrens, wie in Anspruch 10 beschrieben ist, wird vor der Durchführung von Schritt b) ein (flüssiger) Lack in das Unterwerkzeug eingebracht. Der Lack wird dort zunächst aushärten gelassen.

Erst wenn der Lack ausgehärtet ist, wird in das Unterwerkzeug, das mit der ausgehärteten Lackschicht innenseitig - jedenfalls teilweise, also insbesondere entlang dessen Bodenwand - ausgekleidet ist, die flüssige Barriereschicht-Vergussmasse eingebracht.

Nun lässt man erfindungsgemäß die Barriereschicht-Vergussmasse aushärten. Sodann wird in den Innenraum des Unterwerkzeugs der Schaumkern eingebracht, der von der getränkten Matte umhüllt ist. Das Werkzeug wird nun geschlossen und für eine vorbestimmte Zeit geschlossen gehalten. Nach dem Öffnen des Werkzeuges und nach der Aushärtung der Matrix kann das Bauelement entnommen werden. Das Bauelement weist nun eine Oberfläche auf, die von einer Lackschicht bereitgestellt ist, die eine besonders hohe Güte oder Wertigkeit aufweist. Diese Oberfläche kann als Class-A-Oberfläche bezeichnet werden.

Die zwischen Lackschicht und der Matte aus Verstärkungsfasern vorgesehene Barriereschicht gewährleistet dabei, dass auf der Lackschicht keinerlei Abzeichnungen von Strukturen der Matte oder der Verstärkungsfasern ersichtlich sind.

Ein solches Bauelement weist also eine Class-A-Oberfläche auf.

Gemäß einer vorteilhaften Ausgestaltung der Erfindung ist der Schaumkern als ein Fräsbauteil ausgebildet. Ein solcher Schaumkern wird zunächst gesondert hergestellt und sodann durch einen Fräsvorgang in Form und/oder Kontur gebracht.

Von der Erfindung ist auch umfasst, wenn der Schaumkern durch ein anderes - beliebiges -, formgebendes Verfahren mit einer gewünschten Kontur versehen worden ist. Da der Schaumkern - im endfertigen Zustand des Bauelementes - von einer Matte, einer ausgehärteten Matrix und einer Barriereschicht umgeben ist, ist die Herstellung des Schaumkerns mit relativ wenig Aufwand durchführbar. Hier sind auch verhältnismäßig große Toleranzen in den Außenabmessungen zulässig.

Alternativ ist der Schaumkern als ein Formteil ausgebildet. Insbesondere kann er als ein in einem gesonderten Werkzeug gefertigtes Formteil ausgebildet sein. Der Schaumkern kann aus einem Schaum, insbesondere einem Polyurethan-Schaum, mit einer Dichte von beispielsweise zwischen 30g und 500g pro Liter bestehen. Vorzugsweise besteht der Schaum aus einem Material mit einer Dichte von etwa 100g pro Liter.

Die Einhaltung dieser Parameter ermöglicht einerseits die Bereitstellung eines Bauelementes mit der geforderten Leichtigkeit, also mit sehr geringem Gewicht. Andererseits ist der Schaumkern aus einem Material bereitgestellt, das sich bei einem Aufschäumen der Polyurethan-Vergussmasse für die Matrix selbst nicht wesentlich unter dem Schaumdruck verformt, und mit anderen Worten dem Schaumdruck einen gewissen Eigenwiderstand entgegenbringen kann.

Gemäß einer weiteren vorteilhaften Ausgestaltung der Erfindung ist vorgesehen, dass der Schritt b) des Einbringens einer Barriereschicht-Vergussmasse in das Unterwerkzeug bei geöffnetem Werkzeug erfolgt.

Anzumerken ist, dass auch der Schritt c) bei geöffnetem Werkzeug durchgeführt werden kann.

Gemäß einer weiteren vorteilhaften Ausgestaltung der Erfindung ist vorgesehen, dass der Schritt e) des Tränkens der Matte mit einer Matrix aus einer Polyurethan-Vergussmasse in einer anderen Bearbeitungsposition oder an einem anderen Bearbeitungsort durchgeführt wird, als das Unterwerkzeug. Der Bearbeitungsort ist also von dem Unterwerkzeug beabstandet. Damit wird zum Ausdruck gebracht, dass ein Tränken der Matte jedenfalls nicht unmittelbar in dem Unterwerkzeug erfolgt oder erfolgen muss.

Dies ermöglicht eine besonders einfache Durchführung des Schrittes e), da an einem von dem Unterwerkzeug gesonderten und beabstandeten Bearbeitungsort eine leichte und einfache Handhabung des Bauelementes während des Tränkens der Matte möglich ist.

Gemäß einer alternativen Ausgestaltung der Erfindung kann das Tränken der Matte aber auch unmittelbar im Unterwerkzeug erfolgen, zu einem Zeitpunkt, zu dem die Barriereschicht bereits ausgehärtet ist.

Gemäß einer weiteren vorteilhaften Ausgestaltung der Erfindung wird zwischen den Schritten e) und f) der folgende Schritt f2) durchgeführt: Verbringen des mit der getränkten Matte umhüllten Schaumkerns von dem Bearbeitungsort zu dem Unterwerkzeug.

Ein Verbringen des Schaumkerns erfolgt zeitnah nach dem Tränken der Matte. Die einzelnen Arbeitsschritte sind dabei vorzugsweise so aufeinander abgestimmt, dass zwischen dem Zeitpunkt des Tränkens der Matte und dem Zeitpunkt des Aushärtens der Barriereschicht nicht viel Zeit verbleibt. Vorzugsweise erfolgt eine Abstimmung der einzelnen Arbeitsschritte derart, dass nach dem Tränken der Matte der Schaumkern unverzüglich in das Unterwerkzeug eingebracht werden kann.

Denkbar und von der Erfindung umfasst ist dabei auch, dass das erfindungsgemäße Verfahren an mehreren Bearbeitungsstationen durchgeführt wird. Beispielsweise können mehrere Unterwerkzeuge, z. B. nach Art eines Werkzeug-Rondells, vorgesehen sein, die sukzessive mit Barriereschicht-Vergussmasse befüllt und nachfolgend von mit durchtränkten Matten umhüllten Schaumkernen belegt werden, wobei lediglich ein Bearbeitungsort und eine Bearbeitungsstation vorgesehen ist, an der die Schaumkerne mit Matten umhüllt werden und/oder ein Bearbeitungsort vorgesehen ist, an dem die die Schaumkerne umhüllenden Matten mit einer Polyurethan-Vergussmasse getränkt werden.

Gemäß einer weiteren vorteilhaften Ausgestaltung der Erfindung ist das Bauelement als ein Fahrzeugteil für ein Kfz ausgebildet. Alternativ ist das Bauelement als ein Fahrzeugteil für ein Nutzfahrzeug oder für ein Caravan-Fahrzeug ausgebildet.

Das Bauelement kann als Innenausstattungsteil, Laderaumabdeckung, Verkleidungsteil, Motorhaube, Dachelement, Dachsegment oder dergleichen, für die unterschiedlichen vorgenannten Fahrzeuge ausgebildet sein. Von der Erfindung sind Bauelemente für Fahrzeug-Außenanwendungen und für Fahrzeug-Innenanwendungen umfasst.

Gemäß einer vorteilhaften Ausgestaltung der Erfindung erfolgt der Schritt des Einbringens der Barriereschicht-Vergussmasse in das Unterwerkzeug derart, dass ein Benetzen von horizontalen oder im Wesentlichen horizontal ausgerichteten Wandungsabschnitten des Unterwerkzeuges mit der Barriereschicht-Vergussmasse erfolgt. In der Regel wird zumindest ein Teil der Bodenfläche des Unterwerkzeuges und vorteilhaft die gesamte Bodenfläche des Unterwerkzeuges mit der Barriereschicht-Vergussmasse benetzt. Bei anderen Ausführungsformen ist vorgesehen, dass nur Abschnitte der Bodenwand des Unterwerkzeuges von der Barriereschicht-Vergussmasse benetzt werden.

Denkbar und von der Erfindung umfasst ist auch, dass nur Teilabschnitte der Bodenwand, insbesondere voneinander beabstandete Teilabschnitte der Bodenwand des Unterwerkzeuges von der Barriereschicht-Vergussmasse benetzt werden.

Von der Erfindung ist auch umfasst, wenn neben den Abschnitten der Bodenwand des Unterwerkzeuges auch Abschnitte von Seitenwänden des Unterwerkzeuges von der Barriereschicht-Vergussmasse benetzt werden. Die Seitenwandbereiche können beispielsweise vertikal oder im Wesentlichen vertikal oder schräg zu der Bodenwand des Unterwerkzeuges ausgerichtet oder orientiert sein.

Es kann sich dabei um ebene oder gekrümmte Wandabschnitte der Seitenwände oder Bodenwand des Unterwerkzeuges handeln, oder um solche Wandungsabschnitte des Unterwerkzeuges, die eine beliebige, dreidimensionale Raumform aufweisen.

Gemäß einer vorteilhaften Ausgestaltung der Erfindung ist vorgesehen, dass diejenigen Wandungsabschnitte des Unterwerkzeuges, die von der flüssigen Barriereschicht-Vergussmasse benetzt worden sind, im ausgehärteten Zustand der Barriereschicht mit den entsprechenden Abschnitten der Barriereschicht ausgekleidet sind oder verkleidet sind.

Gemäß einer weiteren vorteilhaften Ausgestaltung der Erfindung ist die Barriereschicht-Vergussmasse von einem Polyurethan bereitgestellt. Dieses kann insbesondere von einem aromatischen Polyurethan gebildet sein.

Weiter vorteilhaft können Verstärkungsstoffe in die Barriereschicht-Vergussmasse eingegliedert sein. Die Verstärkungsstoffe können beispielsweise von mineralischen Verstärkungsstoffen gebildet sein. Vorzugsweise werden die mineralischen Verstärkungsstoffe von Talkum oder Kreide gebildet oder umfassen diese Materialien.

Gemäß einer weiteren vorteilhaften Ausgestaltung der Erfindung weist die Polyurethan-Vergussmasse für die Matrix einen Katalysator auf, der thermisch aktivierbar ist. Beispielsweise kann eine Aktivierungstemperatur im Bereich von ca. 30° bis 100° vorgesehen sein. Vorteilhaft sind insbesondere Aktivierungstemperaturen im Bereich von etwa 45°. Jedenfalls sollte eine Aktivierungstemperatur oberhalb der Raumtemperatur liegen.

Hierdurch besteht die Möglichkeit, das Bauelement zunächst mit der Matte zu umhüllen, und dieses zu tränken, und dann das entsprechend mit der getränkten Umhüllung versehene Bauelement in das Unterwerkzeug einzubringen und erst auf Grund des Umstandes, dass das Werkzeug geheizt ist, die chemische Reaktion der Polyurethan-Vergussmasse (bestehend aus Isocyanat und Polyol) zu initiieren. So kann die Aufschäumreaktion der Polyurethan-Vergussmasse für die Matrix bei geschlossenem Werkzeug kontrolliert werden.

In Folge dieser Reaktion wird die ausgehärtete Barriereschicht mit dem Schaumkern sicher und fest dauerhaft verbunden.

Alternativ können die Polyurethan-Vergussmasse sowie die Matrix einen Reaktionsverzögerer umfassen. Auf diese Weise kann durch die Einhaltung vorherbestimmter Arbeitszeiten und Verbringungszeiten sichergestellt werden, dass die Aufschäumreaktion der Polyurethan-Vergussmasse der Matrix erst stattfindet, wenn der Schaumkern mit der getränkten Umhüllung in das Unterwerkzeug eingebracht und das Werkzeug geschlossen ist.

Gemäß einer vorteilhaften Ausgestaltung der Erfindung ist vorgesehen, dass nach Schritt i) der folgende Schritt j) durchgeführt wird:
j) Bearbeiten der Oberfläche des aus dem Werkzeug entnommenen Bauteils.

Der Schritt des Bearbeitens der Oberfläche des hergestellten und erfindungsgemäßen Bauteils kann beispielsweise umfassen, dass die Oberfläche von Hand punktuell oder abschnittsweise - ggf. auch vollflächig - bearbeitet, z. B. geschliffen wird, oder z. B. auch gesandstrahlt wird, aufgeraut wird, für eine nachfolgende Lackierung vorbereitet wird, etc. Denkbar ist z. B. auch, dass geringfügige Stellen von Hand noch nachgeschliffen oder nachpoliert werden.

Die Erfindung bezieht sich gemäß einer Alternative auch auf ein Verfahren zur Herstellung eines Bauelementes nach Anspruch 14.

In Abweichung von der Lehre des Anspruches 1 ist bei diesem - die selbe Aufgabe lösenden - Verfahren vorgesehen, dass gemäß Schritt dd) ein vollständiges Umhüllen des Schaumkerns mit einer Umhüllungsmatrix aus Polyurethan-Vergussmasse und Verstärkungsfasern stattfindet. Dabei ist als Besonderheit vorgesehen, dass der Schaumkern erst in das Unterwerkzeug eingebracht wird, wenn die Barriereschicht bereits ausgehärtet ist, und wobei das Umhüllen des Schaumkernes teilweise oder vollständig außerhalb des Werkzeuges oder teilweise oder vollständig innerhalb des Werkzeuges erfolgt.

Gemäß dieser Erfindung wird der Schaumkern vollständig mit einer Umhüllungsmatrix aus Polyurethan-Vergussmasse und Verstärkungsfasern umhüllt. Dabei ist nicht zwingend vorgesehen, dass der Schaumkern vollständig, insbesondere entlang seiner beiden Breitseiten, mit einer Matte oder einem Gewebe aus Verstärkungsfasern umhüllt wird. Auf der Seite des Schaumkernes, die in in das Unterwerkzeug eingelegtem Zustand der ausgehärteten Barriereschicht zugewandt ist, ist wenigstens eine Lage von einer Verstärkungsfaser-Gewebeschicht, also z. B. einer Glasfasermatte, bereitgestellt. Auf der Rückseite des Bauteils, also auf der gegenüberliegenden Breitseite des Bauelementes, die nicht zu einer hochwertigen Oberfläche gestaltet werden muss, ist die Anordnung derartiger Fasermatten aus Verstärkungsfasern nicht erforderlich. Hier kann der Polyurethan-Vergussmasse als Verstärkungsfaser oder als Füllstoff auch eine Kurz- oder Langfaser, beispielsweise durch Häckselung eines entsprechenden Gewebes, insbesondere durch Häckselung im Mischkopf, zugefügt werden. Dadurch kann der Herstellungsprozess einfacher und ggf. auch preiswerter ausgestaltet werden. Auf der Rückseite des Bauteils, also auf der Seite des Schaumkernes, die der zu bildenden hochwertigen Oberfläche abgewandt ist, muss insoweit keine Matte oder kein Gewebe vorgesehen sein, sondern hier können zugemischte Verstärkungsfasern, insbesondere Glasfasern ausreichend sein.

Dabei kommen verschiedene Varianten eines Herstellungsverfahrens nach Anspruch 14 in Betracht:
Gemäß einer ersten Variante wird der Schaumkern außerhalb des Unterwerkzeuges mit einer Umhüllungsmatrix umhüllt, indem das Bauteil nur entlang einer Breitseite mit einer Fasermatte belegt wird, diese Matte sodann getränkt wird, indem sie mit einer Matrix aus Polyurethan besprüht wird, wobei sodann - oder zuvor oder zugleich - die Rückseite des Schaumkernes mit Polyurethan besprüht wird, und im Zuge des Besprühens der Rückseite der Polyurethan-Vergussmasse Verstärkungsfasern, z. B. kurzgeschnittene Glasfasern, beigemischt werden. Bei dieser Variante des Verfahrens wird der Schaumkern außerhalb des Unterwerkzeuges vollständig umhüllt, und in vollständig umhüllten Zustand in das Unterwerkzeug eingebracht, aber erst dann, wenn die Barriereschicht in dem Unterwerkzeug bereits ausgehärtet ist.

Sodann folgen die Schritte des Herstellungsverfahrens mit den oben bereits zu Anspruch 1 beschriebenen, besonderen Merkmalen.

Gemäß einer weiteren Variante des Anspruches 14 kann aber auch vorgesehen sein, dass, wenn die Barriereschicht in dem Unterwerkzeug ausgehärtet ist, sodann eine Verstärkungsmatte in das Unterwerkzeug, also entlang der ausgehärteten Barriereschicht, eingelegt wird, diese sodann mit einer Matrix aus Polyurethan-Vergussmasse besprüht wird, sodann der Schaumkern eingelegt wird, und dann die Rückseite des Schaumkerns, also die der Barriereschicht abgewandte Seite des Schaumkerns, mit einem Gemisch aus Polyurethan-Vergussmasse und Verstärkungsfasern besprüht wird.

Die Umhüllungsmatrix des Schaumkerns wird bei dieser Variante also durch die besprühte Matte auf der Vorderseite des Schaumkerns zusammen mit der Polyurethan-Vergussmasse und Verstärkungsfasern auf der Rückseite des Schaumkerns gebildet.

Auch hier folgt im Übrigen das Verfahren nach Anspruch 14 der Lehre des zuvor erörterten Anspruches 1.

Im Übrigen wird zur Vermeidung von Wiederholungen bezüglich der Vorteile und Ausgestaltungen des Verfahrens nach Anspruch 14 auf die obigen, zu Anspruch 1 und den Ansprüchen 2 bis 13 beschriebenen Vorteile, die oben geschilderte Erläuterung der Merkmale, und die Varianten verwiesen. Insbesondere wird darauf hingewiesen, dass, soweit keine technischen Widersprüche bestehen, das Verfahren nach Anspruch 14 in sämtlichen Varianten und Kombinationen auch mit einzelnen Merkmalen der vorgenannten Ansprüche 1 bis 13 betrieben werden kann, wobei auch nur Teilmerkmale als erfindungswesentlich angesehen werden können.

Die Erfindung bezieht sich gemäß Anspruch 15 auch auf ein flächenhaft ausgebildetes Bauelement mit einer hochwertigen Oberfläche.

Wiederum liegt der Erfindung die Aufgabe zugrunde, ein Bauelement bereitzustellen, welches auf einfache und preiswerte Weise herstellbar ist, und sicher mit einer hochwertigen Oberfläche ausgestattet werden kann. Die Erfindung löst diese Aufgabe mit den Merkmalen des Anspruches 15.

Zur Vermeidung von Wiederholungen bezüglich der Bedeutung der Merkmale, deren Auslegung und ihre Zusammenwirkung soll auf die obigen Ausführungen zu den vorgenannten Ansprüchen verwiesen werden.

Vorteilhaft ist das Bauelement als Fahrzeugteil für ein Kfz oder ein Nutzfahrzeug oder ein Caravan-Fahrzeug, wie Innenausstattungsteil, Laderaumabdeckung, Verkleidungsteil, Motorhaube, Dachelement oder Dachsegment, ausgebildet.

Weitere Vorteile ergeben sich aus den nicht zitierten Unteransprüchen, sowie anhand der nachfolgenden Beschreibung der in den Zeichnungen lediglich schematisch und nicht maßstäblich dargestellten Ausführungsbeispiele. Darin zeigen:
- Fig. 1: in einer schematischen Draufsicht ein Ausführungsbeispiel eines erfindungsgemäßen Bauelementes, dessen Breitseite im Wesentlichen rechteckförmig ausgebildet ist,
- Fig. 2: das Bauelement der Fig. 1 in einer schematischen Schnittdarstellung, entsprechend der Schnittlinie II-II in Fig. 1,
- Fig. 3: in einer schematischen Schnittdarstellung ein erstes Werkzeug zur Herstellung eines Schaumkerns, mit Unterwerkzeug und Oberwerkzeug, wobei in das Unterwerkzeug eine flüssige Polyurethan-Vergussmasse eingebracht ist,
- Fig. 4: in einer Darstellung gemäß Fig. 3 das geöffnete Werkzeug und den ausgehärteten, gegenüber dem Unterwerkzeug geringfügig angehobenen Schaumkern,
- Fig. 5: den gemäß Fig. 4 hergestellten Schaumkern,
- Fig. 6: den Schaumkern der Fig. 5 mit einer Umhüllung aus einer Matte aus Verstärkungsfaser-Gewebe, sowie eine Vorrichtung, die eine Matrix aus einer flüssigen Polyurethan-Vergussmasse aufbringt,
- Fig. 6a: in einer Detailansicht gemäß Ansichtspfeil VIa in Fig. 6 einen Ausschnitt der Oberseite der Matte gemäß Fig. 6,
- Fig. 7: den Schaumkern der Fig. 5, der vollständig mit der getränkten Matte umhüllt ist, in Einzeldarstellung,
- Fig. 8: ein Unterwerkzeug eines zweiten Werkzeuges in teilgeschnittener, schematischer Ansicht, welches geringfügig größere Innenabmessungen aufweist als das Unterwerkzeug der Fig. 3, wobei in das Unterwerkzeug der Fig. 8 eine Barriereschicht-Vergussmasse unter Zuhilfenahme einer Einbring-Vorrichtung eingebracht wird,
- Fig. 9: in einer Darstellung gemäß Fig. 8 das Unterwerkzeug mit ausgehärteter Barriereschicht,
- Fig. 10: das Unterwerkzeug der Fig. 9, wobei in das Unterwerkzeug der Schaumkern der Fig. 7 mit getränkter Umhüllung, mit noch nicht ausgehärteter Matrix, eingebracht ist, wobei zusätzlich das Oberwerkzeug dargestellt ist,
- Fig. 11: in einer Darstellung gemäß Fig. 10 das geschlossene Werkzeug, sowie schematisch angedeutet eine Heizung,
- Fig. 12: in einer schematischen Darstellung gemäß Fig. 11 das geöffnete Werkzeug und das entnommene Bauelement mit ausgehärteter Matrix,
- Fig. 13: in Alleindarstellung das endfertige Bauelement der Fig. 12, wobei die Überstandsbereiche abgetrennt sind,
- Fig. 14: das Unterwerkzeug der Fig. 8, wobei unter Zuhilfenahme einer Einbringvorrichtung zunächst eine Lackmasse eingebracht wird,
- Fig. 15: in einer Darstellung gemäß Fig. 14 das Unterwerkzeug mit ausgehärteter Lackschicht, wobei dargestellt ist, wie eine Barriereschicht-Vergussmasse unter Zuhilfenahme einer Vorrichtung in das Unterwerkzeug eingebracht wird,
- Fig. 16: in einer Darstellung gemäß Fig. 15 das Unterwerkzeug mit ausgehärteter Lackschicht und ausgehärteter Barriereschicht, und
- Fig. 17: in Alleindarstellung ein Bauelement, das nach Einbringung eines Schaumkerns mit einer getränkten Umhüllung gemäß Fig. 7 in das Unterwerkzeug der Fig. 16 nach dem Schließen des Werkzeuges und Aushärten der Vergussmasse aus dem Werkzeug entnommen worden ist.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

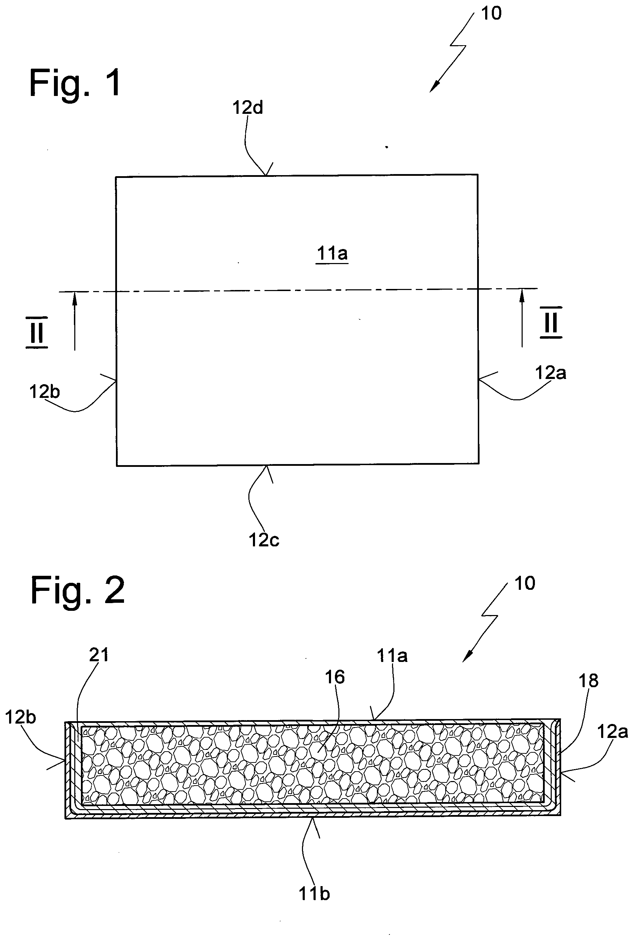

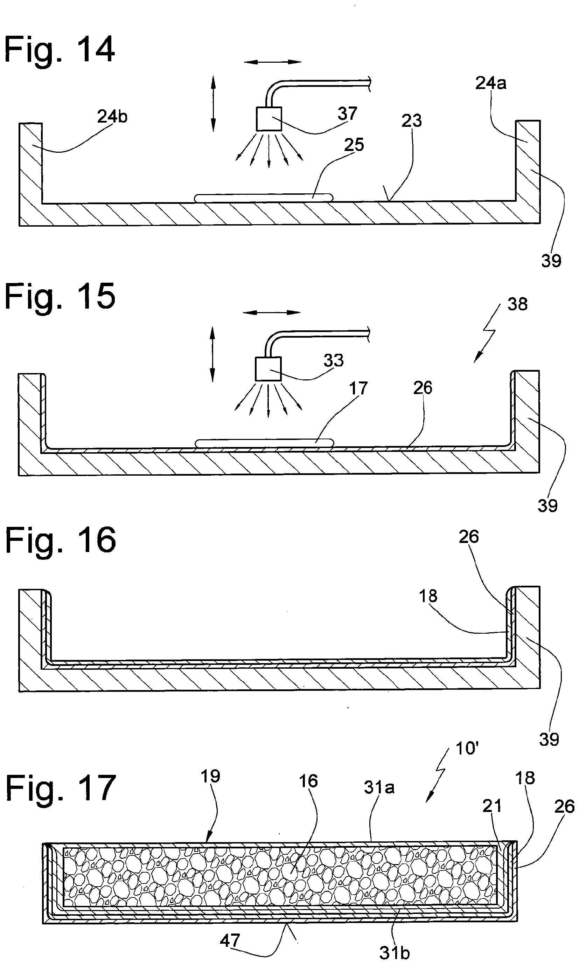

Das erfindungsgemäße Bauelement wird in den Zeichnungen unter Bezugnahme auf das erste Ausführungsbeispiel gemäß den Figuren 1 bis 13 in seiner Gesamtheit mit 10 und unter Bezugnahme auf die Beschreibung des zweiten Ausführungsbeispiels gemäß den Figuren 14 bis 17 in seiner Gesamtheit mit 10' bezeichnet.

Anzumerken ist, dass in den Zeichnungen unterschiedliche Bauelemente 10, 10' gezeigt sind. Das Bauelement 10 gemäß Figur 2 weist einen noch zu erläuternden Sandwich-Aufbau auf. Ein alternatives Bauelement 10' gemäß Figur 17 entspricht vollständig dem Bauelement 10 der Figur 2, weist aber eine zusätzliche Lackschicht 26 auf.

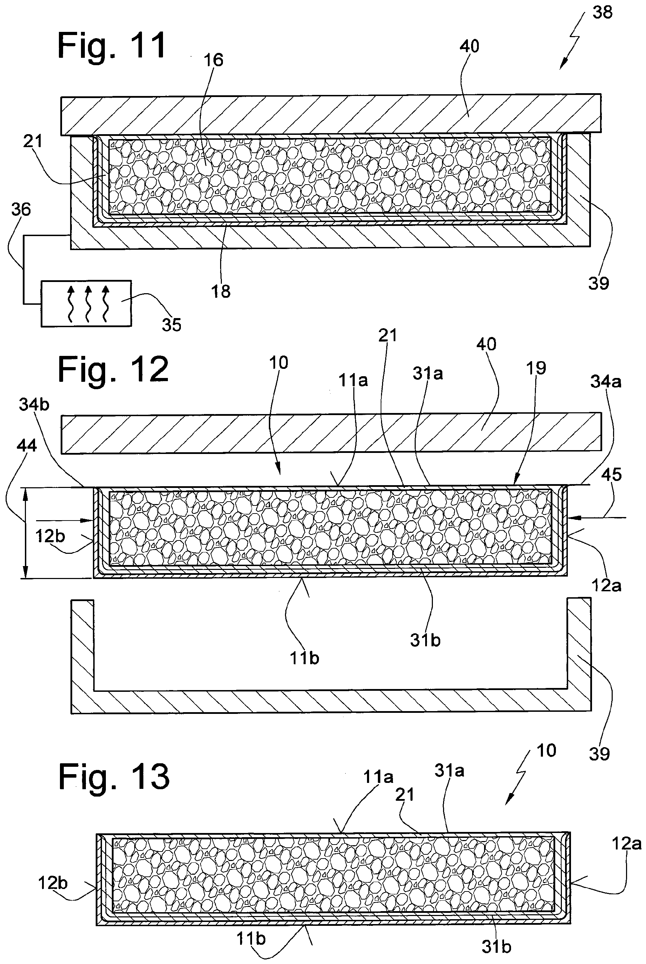

Das zu fertigende Bauelement 10 gemäß Figur 13 ist im Wesentlichen flächenhaft ausgebildet, d. h. es weist eine Wandstärke 44 (Figur 12), d. h. eine Erstreckung in Z-Richtung auf, die wesentlich geringer ist, als die Breitenerstreckung 45, d. h. die Erstreckung entlang einer X-Y-Ebene.

Bei den in den Figuren dargestellten Ausführungsbeispielen ist das zu fertigende Bauelement 10 insgesamt als ein quaderförmiges Element dargestellt. Es ist allerdings von der Erfindung umfasst, dass Bauelemente jeglicher Form und Kontur, insbesondere mit einer 3D-Kontur, hergestellt werden können. Die zu fertigenden Bauelemente können eine beliebige Raumkontur, beispielsweise auch gekrümmte Flächen, Stufen, Sprünge, Hinterschneidungen oder dergleichen aufweisen. Das Bauelement 10 ist insgesamt flächenhaft ausgebildet, d. h. im Wesentlichen dünnwandig.

Gemäß der vereinfachten, quaderförmigen Darstellung in den Figuren weist das Ausführungsbeispiel zwei Breitseiten 11 a, 11 b und vier Seitenwände 12a, 12b, 12c, 12d auf.

Figur 1 zeigt das Bauelement 10 in Draufsicht.

Im Folgenden werden nun die einzelnen Verfahrensschritte zur Fertigung eines Bauelementes 10 gemäß Figur 2 veranschaulicht:

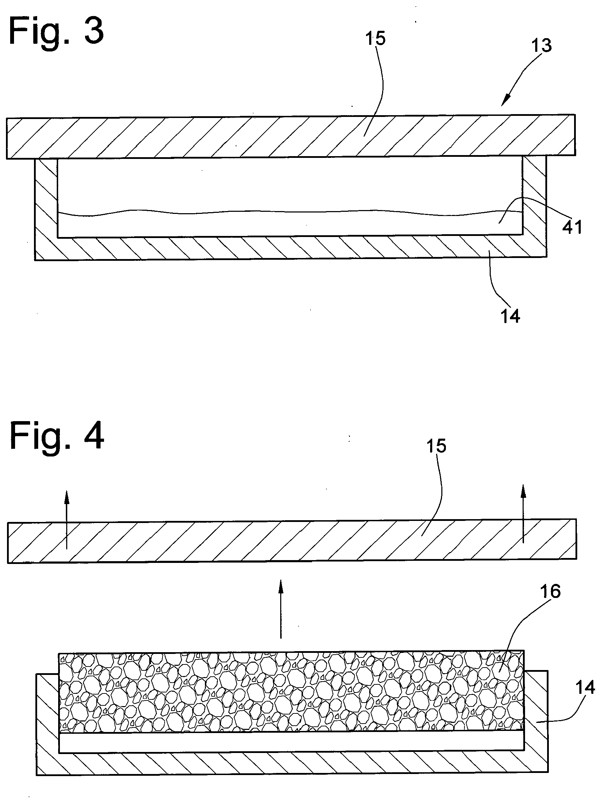

Figur 3 zeigt ein erstes Werkzeug 13, das aus einem Unterwerkzeug 14 und einem Oberwerkzeug 15 besteht. Zur Klarstellung sei bereits an dieser Stelle darauf hingewiesen, dass das erste Werkzeug 13 nur zur Herstellung des Schaumkerns, nicht aber zur Herstellung des Bauteils 10 dient.

In das Unterwerkzeug 14 wird eine flüssige Polyurethan-Vergussmasse 41 eingebracht. Sodann wird das Werkzeug 13 geschlossen.

Die Polyurethan-Vergussmasse schäumt auf, während das Werkzeug geschlossen bleibt, und härtet aus.

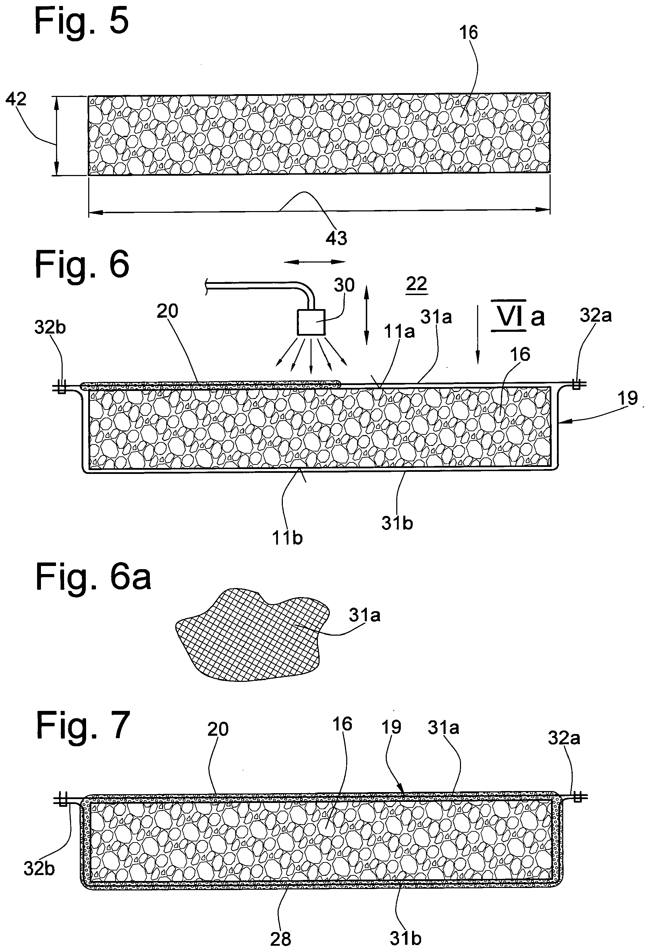

Nach dem Aushärten ist ein Schaumkern 16 bereitgestellt, der, wie in Figur 4 gezeigt, bei geöffnetem Werkzeug entnommen werden kann. Figur 4 zeigt den Schaumkern 16 geringfügig abgerückt von dem Unterwerkzeug 14 und das Oberwerkzeug 15 entfernt angeordnet von dem Unterwerkzeug 14. Ausweislich Figur 5 weist der so gebildete Schaumkern 16 eine Breite 43 auf, die im Übrigen geringer ist, als die Breite 45 des später zu fertigenden Bauteils 10 gemäß Figur 12. Der Schaumkern 16 weist eine Wandstärke oder Höhe 42 auf, die geringfügig geringer ist als die Höhe 44 des zu fertigenden Bauelementes 10 gemäß Figur 12.

Der so gebildete Schaumkern 16 ist ein Leichtschaum und weist eine Dichte von etwa 100g pro Liter auf.

Der Schaumkern 16 gemäß Figur 5 wird nun von einer Matte 19 aus zwei Abschnitten 31a, 31b eines Geleges umhüllt. Figur 6 zeigt die zwei Gelege 31 a, 31 b, die jeweils die Breitseite 11 a, 11 b des Schaumkerns 16 vollständig überdecken. Der Begriff "Gelege" ist gleichbedeutend mit der Bezeichnung eines Gewebes, eines Gewirkes, eines Geflechtes oder einer anderen geeigneten flächigen Faserstruktur.

Die Gelege 31a, 31b stehen bei dem Ausführungsbeispiel der Figur 6 an den Rändern etwas über, und sind unter Zuhilfenahme einer angedeuteten Naht unter Ausbildung von Nahtbereichen 32a, 32b miteinander verbunden. Es ergibt sich insoweit eine vollständige Umhüllung 28 des Schaumkerns 16 durch die Matte 19.

Eine Matte 19 besteht beispielsweise aus einem Glasfasergeflecht oder -gewirk. Insbesondere kommen sogenannte Wirrfasermatten in Betracht, bei denen die einzelnen Glasfasern unregelmäßig angeordnet sind. Figur 6a zeigt beispielhaft die Struktur des Geleges 31 a.

Von der Erfindung ist auch umfasst, wenn auf den beiden unterschiedlichen Seiten des Schaumkerns unterschiedliche Materialien für die Gelege verwendet werden, beispielsweise unterschiedliche Flächengewichte, unterschiedliche Gewebestrukturen, ggf. auch unterschiedliche Materialen der Verstärkungsfasern.

Dabei ist gemäß einer Variante der Erfindung nach Anspruch 14 auch vorgesehen, dass nur auf der Seite des Schaumkerns, die in in das Unterwerkzeug eingelegtem Zustand der ausgehärteten Barriereschicht zugewandt ist, ein Gelege 31 b angeordnet ist, aber auf der Rückseite des Schaumkerns statt einer flächenhaft ausgebildeten Anordnung von Verstärkungsfasern Kurzfasern oder Langfasern, beispielsweise Glasfasern, beispielsweise gehäckselt, in die Polyurethan-Vergussmasse mit eingebracht sind.

Die Matte 19 wird nun unter Zuhilfenahme einer Einbringungsvorrichtung 30 oder Dosiervorrichtung für eine Matrix-Vergussmasse 20 getränkt. Hierzu kann die Dosiereinrichtung 30 entlang der Breitseite 11a des Schaumkerns 16 verfahren oder verlagert werden. Auch kann bei einem Ausführungsbeispiel die Einrichtung 30 entlang der Seitenwände des Schaumkerns 16 und entlang der anderen Breitseite 11b verlagert werden.

Die Verlagerungsrichtungen der Dosiereinrichtung 30 sind in Figur 6 durch Doppelpfeile angedeutet.

Alternativ können auch zwei oder mehrere Einbringungsvorrichtungen 30 vorgesehen sein, die in Figur 6 allerdings nicht dargestellt sind.

Die Einbringungsvorrichtung 30 bringt eine flüssige Matrix-Vergussmasse 20 aus. Mit dieser Matrix-Vergussmasse 20 wird die Matte 19, also die beiden Gelege 31a, 31b, durchtränkt.

Figur 7 veranschaulicht den Schaumkern 16 mit der vollständig durchtränkten und noch nicht ausgehärteten Masse.

Der mit der durchtränkten Masse umhüllte Schaumkern 16 steht nun für eine Verlagerung zu einem weiteren, zweiten Werkzeug 38 zur Verfügung.

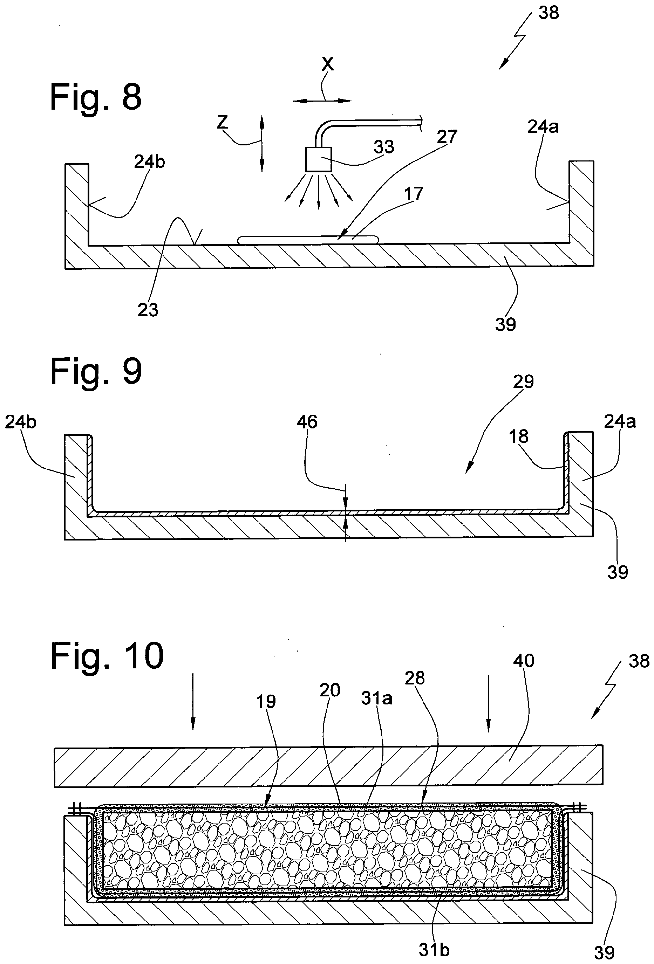

Dieses zweite Werkzeug 38 - und ein der Tränkung der Matte 19 vorausgehender oder etwa zeitgleich durchzuführender Verfahrensschritt - wird nach folgend anhand der Figuren 8 und 9 beschrieben:
Figur 8 zeigt ein Unterwerkzeug 39 des zweiten Werkzeuges 38. Das zweite Werkzeug 38 hat mit dem zuvor anhand der Figuren 3 und 4 dargestellten Werkzeug nichts zu tun.

Figur 8 macht deutlich, dass das Unterwerkzeug 39 einen Innenraum 29 bereitstellt, der von Wandungsabschnitten, und zwar von Bodenwandabschnitten 23 und von Seitenwandabschnitten 24a, 24b und von weiteren, nicht dargestellten Seitenwandabschnitten des Unterwerkzeuges zur Bereitstellung eines im Wesentlichen schalenartig ausgebildeten Innenraumes eines Unterwerkzeuges begrenzt wird.

In dem Innenraum 29 des Unterwerkzeuges 39 wird nun unter Zuhilfenahme einer Einbringungsvorrichtung 33 eine Barriereschicht-Vergussmasse 17 eingebracht. Diese breitet sich insbesondere entlang der Bodenwand 23 des Unterwerkzeuges 39 aus. Das Einbringungswerkzeug 33 kann, wie durch die Pfeile Z und X angedeutet, auch entlang des Unterwerkzeugs 39 bewegbar oder verfahrbar angeordnet sein, um eine noch bessere Verteilung der Barriereschicht-Vergussmasse 17 zu erreichen.

Dies ist aber nicht prinzipiell und unbedingt erforderlich um das erfindungsgemäße Verfahren durchzuführen. Auf Grund ihres viskosen Charakters kann auch vorgesehen sein, dass die Barriereschicht-Vergussmasse 17 sich selbstständig entlang der Bodenfläche 23 des Unterwerkzeuges 39 verteilt.

Auch kann alternativ vorgesehen sein, dass die Einbringungsvorrichtung 33 festgehalten wird, und relativ zu dieser das Unterwerkzeug 39 bewegt wird.

Schließlich kann an Stelle der Einbringung einer Barriereschicht-Vergussmasse 17 unter Zuhilfenahme einer Vorrichtung 33 auch vorgesehen sein, dass die Barriereschicht-Vergussmasse manuell in das Unterwerkzeug 39 eingebracht wird.

Im Folgenden soll angenommen werden, dass in Folge einer Verlagerung des Einbringungswerkzeuges 33 nicht nur entlang der Bodenwand 23, sondern auch entlang der Wandabschnitte 24a, 24b Barriereschicht-Vergussmasse 17 aufgebracht wird.

Bei offenem Werkzeug wird gemäß der Durchführung des erfindungsgemäßen Verfahrens nun die Barriereschicht-Vergussmasse 17 aushärten gelassen. Hier entsteht eine ausgehärtete Barriereschicht 18.

Eine ausgehärtete Barriereschicht 18 ist überall dort vorhanden, also an den Seitenwand- und Bodenwandabschnitten 24a, 24b, 23 des Unterwerkzeuges 39, wo zuvor flüssige Barriereschicht-Vergussmasse 17 aufgebracht worden ist.

Figur 9 zeigt insoweit auch, dass entlang der Seitenwandabschnitte 24a, 24b des Unterwerkzeugs 39 ebenfalls Abschnitte der ausgehärteten Barriereschicht 18 angeordnet sind.

Der Eintrag der Barriereschicht-Vergussmasse 17 erfolgt, wie aus Figur 8 ersichtlich, bei offenem Werkzeug 38.

Die Barriereschicht 18 weist im ausgehärteten Zustand eine Wandstärke 46 von beispielsweise etwa einem Millimeter auf. Sie ist also relativ dünn. Bei anderen Ausführungsbeispielen der Erfindung ist die ausgehärtete Barriereschicht zwischen 0,3 Millimeter und 2,5 Millimeter dick. Die Barriereschicht kann - das sei an dieser Stelle erwähnt - auch mineralische Verstärkungsstoffe 27, beispielsweise Talkum oder Kreide enthalten.

In das Unterwerkzeug 39 mit darin angeordneter, eine Art Innenverkleidung des Unterwerkzeugs 39 bereitstellender Barriereschicht 18 wird nun das Element der Figur 7, also der mit einer durchtränkten Umhüllung 28 versehene Schaumkern 16 eingelegt, dessen Matrix-Vergussmasse 20 noch nicht ausgehärtet ist. Hierzu wird der Schaumkern 16 mit getränkter Matte 19 zunächst von seinem vorherigen Bearbeitungsort gemäß Figur 6 zu dem Unterwerkzeug 39 verbracht.

Figur 10 zeigt die Situation, in der das Werkzeug 38 noch geöffnet ist, und der Schaumkern 16 mit der noch nicht ausgehärteten Matrix-Vergussmasse 20 in dem Unterwerkzeug 39 untergebracht ist.

Nun wird das Werkzeug geschlossen, wie in Figur 11 zu sehen ist.

Das Unterwerkzeug 39, bzw. ggf. auch das Oberwerkzeug 40 kann durch eine Heizung 35 unter Zuhilfenahme von in Figur 11 lediglich schematisch angedeuteten Wärmeleitungen 36 temperiert werden. Die Werkzeugtemperatur liegt beispielsweise im Bereich von zwischen 30° und 100°, vorzugsweise etwa bei 45°.

In der Matrix-Vergussmasse 20 kann ein thermisch aktivierbarer Katalysator angeordnet sein. Unter Zuhilfenahme der Werkzeugtemperatur kann nun dafür gesorgt werden, dass bei geschlossenem Werkzeug 38 gemäß Figur 11 ein Aushärten der Matrix-Vergussmasse 20 zu einer ausgehärteten Matrix 21, wie in Figur 11 dargestellt, erfolgt. Durch das Aushärten der Matrix 21 wird eine dauerhaft feste Verbindung zwischen dem Schaumkern 16 und der ausgehärteten Barriereschicht 18 bewerkstelligt.

Nun kann das Werkzeug 38 geöffnet werden, wie in Figur 12 ersichtlich, und das so gebildete Bauelement 10 entnommen werden. Im Bereich der Überstandsbereiche 34a, 34b kann nun ein Abtrennvorgang, beispielsweise durch Fräsen, erfolgen.

Die Barriereschicht 18, insbesondere dessen Breitseite 11 b, aber auch deren Seitenwandbereiche 12a, 12b, stellen nun eine sehr hochwertige Oberfläche bereit. Auf dieser Oberfläche zeichnen sich die Strukturen der Matte 19, bzw. der Gelege 31 a, 31 b trotz deren Rauigkeit und Topographie, also deren Struktur, nicht ab.

Das endfertig hergestellte Bauelement 10 ist in Figur 13 in Alleindarstellung gezeigt.

Angemerkt sei, dass entgegen der Darstellung der Figur 13, bei den Ausführungsbeispielen der Erfindung auch noch oberhalb oder außerhalb der Matte 19 Werkstoffbereiche der ausgehärteten Matrix 21 angeordnet sein können.

Bei einer alternativen Herangehensweise, wie bei dem Ausführungsbeispiel der Figuren 14 bis 17 gezeigt, wird in das Unterwerkzeug 39 zunächst unter Zuhilfenahme einer Einbringungsvorrichtung 37 eine flüssige Lackmasse 25 eingebracht. Diese wird wiederum entlang der Bodenabschnitte 23 des Unterwerkzeuges 39 verteilt, ggf. auch entlang von Seitenwandabschnitten 24a, 24b.

Diese Lackmasse 25 wird fachmännisch auch als IMP-(= in-mouldpainting) Lack bezeichnet. Er kann im ausgehärteten Zustand eine Wandstärke von beispielsweise 1/10 mm bis mehreren zehnteln Millimetern aufweisen.

Entsprechende IMP-Lacke, die hochfeste Lackfilme erzeugen, sind beispielsweise bei der Firma Emil Frei GmbH & Co. KG mit Sitz in 78199 Bräunlingen, erhältlich.

Die Lackmasse 25 härtet innerhalb einer kurzen Aushärtungszeit, beispielsweise von nur wenigen Sekunden, zu einer ausgehärteten Lackschicht 26 aus (Figur 15). Der Aushärteprozess wird vorteilhafterweise ebenfalls wiederum bei geöffnetem Werkzeug 38 durchgeführt.

Nun werden all diejenigen Verfahrensschritte durchgeführt, die bereits zuvor anhand des vorherig beschriebenen Ausführungsbeispiels beschrieben worden sind: In das Unterwerkzeug 39, dass nun mit einer Lackschicht 26 ausgekleidet oder verkleidet ist, wird nun unter Zuhilfenahme der zuvor bereits beschriebenen Einbringungsvorrichtung 33 eine Barriereschicht-Vergussmasse 17 - die Lackschicht 26 überdeckend - eingebracht. Diese härtet - wie bereits zuvor beschrieben - zu einer Barriereschicht 18 aus. Der entsprechende Zustand ist in Figur 16 dargestellt.

Die Barriereschicht geht dabei bereits eine feste Verbindung zu der Lackschicht 26 ein.

Nun wird das in Figur 7 dargestellte Element, umfassend den Schaumkern 16 und die getränkte, noch nicht ausgehärtete Umhüllung 28, bestehend aus noch flüssiger Matrix-Vergussmasse 20 und den Gelegen 31a, 31b - also der Matte 19 - in das Unterwerkzeug 39 gemäß Figur 16 eingelegt. Sodann wird das Werkzeug 38 geschlossen und unter Zuhilfenahme der zuvor beschriebenen Heizung eine Aushärtung der Matrix-Vergussmasse 20 zu einer Matrix 21 bewerkstelligt.

Das fertige Bauelement 10' zeigt in Einzeldarstellung Figur 17.

Die Lackschicht 26 des Bauelementes 10' stellt eine hochwertige Class-A-Oberfläche 47 bereit, die keiner weiteren Nachbearbeitung oder Lackierung mehr bedarf.

Der guten Ordnung halber sei angemerkt, dass die Oberfläche 11 b des Bauelementes 10 gemäß Figur 13 eine lackierfähige Oberfläche bereitstellt. Diese hochwertige Oberfläche 11 b bedarf einer einfachen Lackierung, um - ohne, dass irgendeine Nachbearbeitung der Oberfläche erforderlich wäre - unmittelbar zu einer Class-A-Oberfläche gewandelt zu werden.

Beschrieben wurde bei den Ausführungsbeispielen eine Matrix-Vergussmasse 20, die zu einer Matrix 21 aushärtet, wobei ein Katalysator, der thermisch aktivierbar ist, Anwendung findet. Angemerkt sei, dass an Stelle eines so beschriebenen Katalysators im Rahmen der Erfindung auch ein Zusatzstoff Anwendung finden kann, der die Reaktion des in der Vergussmasse enthaltenen Isocyanat und des Polyols verzögert, so dass unter Einhaltung entsprechender Prozesszeiten zwischen der Tränkung der Matte 19 und dem Einbringen der mit der getränkten Matte umhüllten Schaumkernanordnung 16 in das Unterwerkzeug 39 und dem Schließen des Werkzeuges eine entsprechende Reaktionszeit verbleibt.

Die Einbringung der flüssigen Lackmasse 25, bzw. der flüssigen Barriereschicht-Vergussmasse 17 kann entlang von Seitenwandabschnitten 24a, 24b des Unterwerkzeuges 39 erfolgen, die bis zu einem Winkel von 89° geneigt sein können, um gerade noch eine Entformung zu ermöglichen. Diese Winkelangabe gilt für ein schieberfreies Werkzeug.

Für den Fall, dass das Werkzeug Schieber aufweist, oder dass vorgefertigte Losteile (die vorlackiert sein können) mit eingesetzt werden, können im Rahmen der Erfindung auch Hinterschneidungen von der flüssigen Lackmasse 25, bzw. der flüssigen Barriereschicht-Vergussmasse 17 mit abgedeckt werden.

Das Aushärten der flüssigen Lackmasse 25, bzw. der flüssigen Barriereschicht-Vergussmasse 17 kann unter sehr kurzen Aushärtezeiten, von beispielsweise nur wenigen Sekunden, beispielsweise von 2 Sekunden, erfolgen.

Für den Fall, dass in dem Unterwerkzeug 39 ein Bauelement 10' gefertigt werden soll, welches eine Lackschicht 26 aufweist, ist gemäß der Erfindung vorgesehen, dass das Werkzeugunterteil 39 auf seiner Innenseite auf Hochglanz poliert wird. Von der Erfindung ist auch umfasst, wenn das Werkzeugunterteil 39 auf seiner Innenseite nur entlang eines Abschnittes oder entlang mehrerer Abschnitte auf Hochglanz poliert ist.

Als Material für den Schaumkern 16 kann beispielsweise ein Kompaktschaum Rohacell von der Firma Evonik Röhm GmbH, mit Sitz in Darmstadt, Anwendung finden.

Der Schaumkern 16 kann unter Umständen auch noch einen Füllstoff enthalten, muss allerdings einen solchen nicht enthalten. Der Schaumkern 16 fungiert im Prinzip nur als ein Abstandshalter, der seine beiden Breitseiten, bzw. die an den Breitseiten anliegenden Schichten der ausgehärteten Matrix 21 voneinander beabstandet hält. Der Schaumkern 16 soll eine gewisse Grundsteifigkeit aufweisen. Im Prinzip wird die Steifigkeit aber durch die ausgehärtete Barriereschicht 18 und die ausgehärtete Matrix 21 bereitgestellt.

Das Aufbringen der Matrix-Vergussmasse 20 auf die Gelege 31a, 31 b kann in Folge eines Sprühvorganges erfolgen. Alternativ können die Gelege 31a, 31b auch in die Vergussmasse 20 getaucht werden. Hier kommen beliebige Verfahren zum Einsatz.

Im Falle eines Sprühens wird nur ein sehr dünner Film an Matrix-Vergussmasse 20 auf die Gelege 31a, 31b aufgesprüht. Das flüssige Vergussmaterial weist eine Sprühdicke in der Größenordnung nur weniger Millimeter, gegebenenfalls auch von weniger als 1 mm auf.

Bei geschlossenem Werkzeug 38 soll die Matrix-Vergussmasse 20 aufschäumen. Dabei wird der Schaumdruck so eingestellt, dass nur eine geringfügige Volumenänderung stattfindet, mit anderen Worten nur ein geringer Schaumdruck erzeugt wird. Der Schaumdruck soll gerade so eingestellt sein, dass der Polyurethanschaum der Matrix-Vergussmasse 20 zwar überall gleichmäßig verteilt in die Glasfasermatte 31a, 31b eindringt, und im ausgehärteten Zustand eine Verbindung zwischen Schaumkern 16 und der ausgehärteten Barriereschicht 18 bereitstellt. Der Schaumdruck soll allerdings so eingestellt werden, dass kein oder überwiegend kein Eindringen des Schaumes in den Schaumkern 16 hinein stattfindet. Der Schaumdruck soll gemäß einer Ausführungsform der Erfindung so eingestellt werden, dass der Schaumkern 16 nicht oder jedenfalls überwiegend nicht komprimiert oder zerdrückt wird. Es soll allerdings sehr wohl eine Verhaftung, bzw. ggf. auch ein Formschluss zur Erzielung einer festen Verbindung erreicht werden.

Zum Tränken der Matt 19 mit Matrix-Vergussmasse 20 kann bei festgehaltenem Schaumkern eine Einbringvorrichtung 30 verlagerbar geführt werden, die Umfangskontur der Umhüllung 28 des Schaumkerns 16 abfahrend. Alternativ können auch zwei oder mehr Dosiereinrichtungen 30 vorgesehen sein, die den Schaumkern von zwei (oder von mehreren Seiten) besprühen.

Nach dem Einbringen des mit einer getränkten Matte 19 umhüllten Schaumkerns 16 in das Unterwerkzeug 39 und einem Schließen des Werkzeugs 38 beträgt die Reaktionsdauer beispielsweise zwischen 0,5 Minuten und 5 Minuten.

Nach dem Öffnen des Werkzeuges 38 und dem Entnehmen des so gebildeten Bauelementes 10, 10', werden die überstehenden Ränder 34a, 34b vorteilhafterweise abgefräst oder abgeschnitten.

Bei den Ausführungsbeispielen besteht die Matte 19 aus einer oder aus mehreren Lagen 31a, 31b von Glasfasergewebe. Hier kommen insbesondere auch sogenannte Wirrglasfasermatten in Betracht, bei denen es sich um Vliese oder Gewebe unter Verwendung von Glasfasern oder anderen Verstärkungsfasern handelt, die eine unregelmäßige Struktur aufweisen.

Von der Erfindung ist auch umfasst, wenn eine oder mehrere Verstärkungsfasermatten 31a, 31 b noch von zusätzlichen Flächengeweben, Vliesen, Abdeckvliesen, etc. abgedeckt werden, die gemeinsam eine Umhüllung 28 für den Schaumkern 16 bilden, die insgesamt getränkt wird. Derartige Abdeckvliese können - insbesondere in Verbindung mit der ausgehärteten Barriereschicht 18 - noch besser verhindern, dass sich Strukturen der Verstärkungsfasern auf der Class-A-Oberfläche 47 oder auf der hochwertigen Oberfläche 11b abzeichnen, bzw. verhindern, dass die Oberfläche 11b, 47 des Bauteils 10, 10' als eine Class-A-Oberfläche klassifiziert wird.

Die Seitenwandabschnitte 12a, 12b des Bauteils 10, 10' werden ebenfalls als eine hochwertige Oberfläche im Sinne der Erfindung angesehen.

Um jegliche Lufteinschlüsse zwischen der Barriereschicht 18 und dem Schaumkern 16 zu vermeiden, können gemäß der Erfindung eine Reihe von Maßnahmen vorgesehen sein: So kann beispielsweise der Schaumkern oberflächenbehandelt sein. Auch können an dem Schaumkern 16 Entlüftungsstrukturen, Luftkanäle oder dergleichen vorgesehen sein. Schließlich kann durch eine Bearbeitung der Schaumkernoberfläche eine gewisse Rauheit bereitgestellt werden, die eine Verteilung und ein Abfließen von Luft während des Aushärtens der Matrix-Vergussmasse 20 bei geschlossenem Werkzeug 38 fördert, und das Bilden und Einschließen von Luftblasen sicher verhindert.

Als geeignete Lackmassen 25 kommen wasserlösliche IMC-Lacke, lösemittelhaltige Lacke, oder sogenannte Urea-Lacke in Betracht, wobei letztere besonders vorteilhaft sind, da nur geringe Aushärtezeiten erforderlich sind.

Die erfindungsgemäß hergestellten Bauelemente 10, 10' weisen ein nur sehr geringes Gewicht und eine sehr hohe Steifigkeit auf. Das erfindungsgemäße Bauteil 10, 10' besteht aus sehr dünnwandigen, harten Deckschichten in Form der Lackschicht 26, der Barriereschicht 18 und der Matrix 21, und einem demgegenüber sehr dickwandigen PU-Schaumkern 16. Das erfindungsgemäß gefertigte Bauteil 10, 10' kann an Sichtstellen eingesetzt werden. Die Vornahme einer Kaschierung und ein diesbezüglich sehr aufwändiger Arbeitsschritt ist erfindungsgemäß nicht mehr erforderlich.

Nach dem Schließen des Werkzeuges 39 zum Zwecke des Aushärtens der Matrix 21 sind die Parameter, Presskraft, Temperatur und Pressdauer des Werkzeugs 38 einzuhalten, bis das Matrix-System 21 ausreagiert ist. Dann kann das Werkzeug 38 wieder geöffnet werden.

Erfindungsgemäß wird erstmalig ein Verfahren angegeben, mit dem ein Bauteil 10, 10' mit einer Class-A-Oberfläche 47 in einem einzigen Produktionsschritt hergestellt wird. Zusätzliche Schritte einer nachträglichen Oberflächenbearbeitung, wie Schleifen oder Lackieren, und zusätzliche für die Prozessschritte erforderliche Anlagen und die damit einhergehenden Kosten können erfindungsgemäß entfallen.

## Patentansprüche

1. Verfahren zur Herstellung eines flächenhaft ausgebildeten Bauelementes (10, 10') in Sandwich-Leichtbauweise mit einer hochwertigen Oberfläche (11b, 12a, 12b), insbesondere einer Class-A-Oberfläche (47), oder einer zu einer Class-A-Oberfläche (47) lackierbaren Oberfläche (11 b), umfassend die folgenden Schritte:
a) Bereitstellen eines Schaumkernes (16),
b) Einbringen einer Barriereschicht-Vergussmasse (17) in ein Unterwerkzeug (39) eines Werkzeuges (38),
c) Aushärtenlassen der Barriereschicht-Vergussmasse (17) in dem Unterwerkzeug (39) zu einer dünnwandigen Barriereschicht (18),
d) Umhüllen des Schaumkerns (16) mit einer Matte (19) aus Verstärkungsfasern,
e) Allseitiges Tränken der Matte (19) mit einer Matrix aus einer Polyurethan-Vergussmasse (20),
f) Einbringen des mit der getränkten Matte (19) umhüllten Schaumkerns (16) in das mit der ausgehärteten Barriereschicht (18) innenseitig ausgekleidete Unterwerkzeug (39),
g) Schließen des Werkzeugs (38), insbesondere durch ein Aufeinanderzubewegen des Unterwerkzeugs (39) und eines Oberwerkzeugs (40),
h) Aushärtenlassen der Matrix (21),
i) Öffnen des Werkzeugs und Entnehmen des so gebildeten Bauelementes (10, 10').

2. Verfahren nach Anspruch 1, **dadurch gekennzeichnet, dass** der Schaumkern als Fräsbauteil oder als ein Formteil (16), insbesondere als in einem gesonderten Werkzeug (13) gefertigtes Formteil, ausgebildet ist.

3. Verfahren nach Anspruch 1 oder 2, **dadurch gekennzeichnet, dass** der Schaumkern (16) eine Dichte im Bereich zwischen 30-500 g/l (Gramm pro Liter), insbesondere etwa 100 g/l, aufweist.

4. Verfahren nach einem der vorangegangenen Ansprüche, **dadurch gekennzeichnet, dass** der Schritt b) bei geöffnetem Werkzeug (38) durchgeführt wird.

5. Verfahren nach einem der vorangegangenen Ansprüche, **dadurch gekennzeichnet, dass** Schritt e) an einem Bearbeitungsort (Fig. 6) durchgeführt wird, der von dem Unterwerkzeug (39) beabstandet ist.

6. Verfahren nach einem der vorangegangenen Ansprüche, **dadurch gekennzeichnet, dass** zwischen den Schritten e) und f) der folgende Schritt f2) durchgeführt wird:
f2) Verbringen des mit der getränkten Matte (19) umhüllten Schaumkerns (16) von dem Bearbeitungsort zu dem Unterwerkzeug (39).

7. Verfahren nach einem der vorangegangenen Ansprüche, **dadurch gekennzeichnet, dass** das Bauelement (10, 10') als Fahrzeugteil für ein Kfz oder ein Nutzfahrzeug oder ein Caravan-Fahrzeug, wie Innenausstattungsteil, Laderaumabdeckung, Verkleidungsteil, Motorhaube, Dachelement oder Dachsegment, ausgebildet ist.

8. Verfahren nach einem der vorangegangenen Ansprüche, **dadurch gekennzeichnet, dass** der Schritt des Einbringens der Barriereschicht-Vergussmasse (17) in das Unterwerkzeug (39) ein Benetzen von horizontal oder im Wesentlichen horizontal ausgerichteten Wandungsabschnitten (23) des Unterwerkzeugs (39) mit der Barriereschicht-Vergussmasse (17) umfasst.

9. Verfahren nach einem der vorangegangenen Ansprüche, **dadurch gekennzeichnet, dass** der Schritt des Einbringens der Barriereschicht-Vergussmasse (17) in das Unterwerkzeug (39) auch ein Benetzen von vertikal oder von im Wesentlichen vertikal oder von schräg zu einer Bodenwand (23) des Unterwerkzeugs (39) ausgerichteten Wandungsabschnitten (24a, 24b) des Unterwerkzeugs (39) mit der Barriereschicht-Vergussmasse (17) umfasst.

10. Verfahren nach einem der vorangegangenen Ansprüche, **dadurch gekennzeichnet, dass** vor Schritt b) der folgende Schritt a2) durchgeführt wird:
a2) Einbringen eines Lackes (25) in das Unterwerkzeug (39) und Aushärtenlassen des Lackes, wobei im Zuge der Durchführung des Schrittes b) die Barriereschicht-Vergussmasse (17) in das mit der ausgehärteten Lackschicht (26) innenseitig ausgekleidete Unterwerkzeug (39) hinein eingebracht wird.

11. Verfahren nach einem der vorangegangenen Ansprüche, **dadurch gekennzeichnet, dass** die Barriereschicht-Vergussmasse (17) von einem Polyurethan, insbesondere von einem aromatischen Polyurethan bereitgestellt ist, wobei insbesondere Verstärkungsstoffe, weiter insbesondere mineralische Verstärkungsstoffe, wie Talkum oder Kreide, zugesetzt sind.

12. Verfahren nach einem der vorangegangenen Ansprüche, **dadurch gekennzeichnet, dass** die Polyurethan-Vergussmasse (20) für die Matrix (21) einen Katalysator aufweist, der thermisch aktivierbar ist oder einen Reaktions-Verzögerer umfasst,

13. Verfahren nach einem der vorangegangenen Ansprüche, **dadurch gekennzeichnet, dass** nach Schritt i) der folgende Schritt j) durchgeführt wird:
j) Bearbeiten der Oberfläche des aus dem Werkzeug (38) entnommenen Bauteils (10, 10').

14. Verfahren zur Herstellung eines flächenhaft ausgebildeten Bauelementes (10, 10') in Sandwich-Leichtbauweise mit einer hochwertigen Oberfläche (11b), insbesondere einer Class-A-Oberfläche (47), oder einer zu einer Class-A-Oberfläche (47) lackierbaren Oberfläche (11 b), umfassend die folgenden Schritte:
a) Bereitstellen eines Schaumkernes (16),
b) Einbringen einer Barriereschicht-Vergussmasse (17) in ein Unterwerkzeug (39) eines Werkzeuges (38),
c) Aushärtenlassen der Barriereschicht-Vergussmasse (17) in dem Unterwerkzeug (39) zu einer dünnwandigen Barriereschicht (18),
dd) vollständiges Umhüllen des Schaumkerns (16) mit einer Umhüllungsmatrix aus Polyurethan-Vergussmasse und Verstärkungsfasern,
ee) wobei der Schaumkern (16) erst in das Unterwerkzeug (39) eingebracht wird, wenn die Barriereschicht (18) ausgehärtet ist,
ff) und wobei das Umhüllen des Schaumkerns teilweise oder vollständig außerhalb des Werkzeugs (38) oder teilweise oder vollständig innerhalb des Werkzeuges (38) erfolgt,
g) Schließen des Werkzeugs (38), insbesondere durch ein Aufeinanderzubewegen des Unterwerkzeugs (39) und eines Oberwerkzeugs (40),
h) Aushärtenlassen der Umhüllungsmatrix (21),
i) Öffnen des Werkzeugs und Entnehmen des so gebildeten Bauelementes (10, 10').

15. Flächenhaft ausgebildetes Bauelement (10, 10') mit einer hochwertigen Oberfläche (11 b, 12a, 12b), insbesondere einer Class-A-Oberfläche (47), oder einer zu Class-A-Oberfläche (47) lackierbaren Oberfläche (11 b), insbesondere hergestellt nach einem der vorangegangenen Ansprüche, umfassend einen Schaumkern (16), eine allseitige Umhüllung (28) mit einer Matte (19) aus Verstärkungsfasern, die in eine ausgehärtete Matrix (21) aus Polyurethan-Vergussmasse (20) eingebettet ist, und einer die Matrix wenigstens einseitig, entlang wenigstens einer Breitseite (11b) des Bauelementes (10) vollständig abdeckenden, gesondert von der Matrix ausgehärteten Barriereschicht (18), insbesondere aus Polyurethan, wobei die Matrix (21) die Barriereschicht (18) mit dem Schaumkern (16) fest verbindet.
